# EUROPEAN PATENT APPLICATION

(11) **EP 4 745 959 A1**
(43) Date of publication of application: **20.05.2026**
(21) Application number: 25217021.2
(22) Date of filing: 19.11.2025
(51) Int. Cl.: G10L 15/26, G10L 17/00

(54) **ELECTRONIC METHOD AND SYSTEM WITH CONTEXT-BASED FILTERING**

(30) Priority: 19.11.2024 US 202418952917
(71) Applicant: Mitel Networks Corporation, Ottawa, Ontario K2K 3K1 (CA)
(72) Inventor: Kumar Gupta, Mayankesh, 560045 Bangalore (IN); Chaurasia, Upendra, 560017 Bangalore (IN)
(74) Representative: McDougall, James

(57) **Abstract**

Systems and methods for filtering voice information based on context and/or language are provided. A method can include identifying speaker voice streams and forming individual voice streams with associated identifiers, converting audio information of the individual voice streams to text information with associated identifier information, determining a context of at least portions of the text information, and filtering the voice streams based on the context and/or language within segments of the voice streams.

## Description

### FIELD OF THE DISCLOSURE

The present disclosure generally relates to electronic communication systems and methods. More particularly, the disclosure relates to electronic communication methods and systems capable of determining a context and/or language of segments of voice streams and filtering the voice streams based on the context and/or language.

### BACKGROUND OF THE DISCLOSURE

Electronic communication systems, such as video conference and other collaborative electronic communication systems, are used for a variety of purposes. For example, electronic communication systems are often used in work environments to promote efficient communication between two or more participants that are remote from each other.

While typical electronic communication systems work relatively well for many applications, such systems can allow distractions caused by side conversations and other speech that may not be relevant to the communication. For example, there may be instances where one or more participants do not know that their microphone is not muted, and such participants might engage in side conversations that are not relevant to the electronic communication. Such side conversations and other non-relevant speech can result in interruptions and distractions. For example, one or more participants may be requested to mute their microphones and/or requested to stay focused on the context/topic of the meeting.

Further, there may be cases in which one or more participants to an electronic communication begin speaking in a language that is not well understood by one or more other participants and/or that is not the primary language of the meeting. Such speech may be distracting and cause confusion, reduce trust, and/or reduce focus of the other participants. Such distractions can generally decrease productivity associated with the electronic communication.

Accordingly, improved electronic communication systems and methods for providing context- and/or language-based filtering of electronic communication information are desired.

### SUMMARY

A first aspect of this disclosure provides an electronic communication method comprising: using a voice identification engine, identifying speaker voice streams and forming individual voice streams with associated identifiers; using a speech-to-text conversion engine, converting audio information of the individual voice streams to text information with associated identifier information; using a context/language determination engine, determining a context of the electronic communication and a context of at least portions of the text information; using a context/language filter module, filtering the individual voice streams based on the context; and transmitting individual filtered voice streams to one or more electronic communication participant devices, wherein the steps of using a voice identification engine, using a speech-to-text conversion engine, using a context/language determination engine, using a context/language filter module, and transmitting the individual filtered voice streams are performed using real-time processing.

The electronic communication method may further comprise: using a segmentation engine, segmenting the individual voice streams to generate the audio information.

The electronic communication method may further comprise a step of: using the context/language determination engine, determining a primary language of the electronic communication.

The electronic communication method may further comprise a step of: using the context/language filter module, filtering the individual voice streams based on the primary language.

The electronic communication method may further comprise a step of: sending a message to a participant indicating that the participant's voice stream has been filtered.

The method may further comprise a step of reconstructing the individual voice streams that do not include filtered information.

The method may further comprise one or more of smoothing or crossfading of audio segments of the filtered voice streams.

The method may further comprise a step of tokenization of the text information with associated identifier information.

The method may further comprise a step of removing stop words.

The method may further comprise a step of lemmatization.

The method may further comprise a step of vectorization.

Second aspect of this disclosure provides an electronic communication system comprising: a voice identification engine configured to identify speaker voice streams and generate one or more individual voice streams with associated identifiers; a speech-to-text conversion engine configured to convert audio information of the one or more individual voice streams to text information with associated identifier information; a context/language determination engine configured to determine a context of the electronic communication and determine a context of at least a portion of the text information; and a context/language filter module configured to filter the one or more individual voice streams based on the context.

The context/language determination engine may be configured to determine a primary language of an electronic communication.

The context/language filter module may be further configured to filter voice stream information based on the primary language.

The electronic communication system may further comprise a segmentation engine configured to segment the one or more individual voice streams.

The electronic communication system may further comprise a database comprising context information. The database may further comprise primary language information.

A third aspect of this disclosure provides a communication server comprising: a voice identification engine configured to identify speaker voice streams and generate one or more individual voice streams with associated identifiers; a speech-to-text conversion engine configured to convert audio information of the one or more individual voice streams to text information with associated identifier information; a context/language determination engine configured to determine a context of the electronic communication and determine a context of at least a portion of the text information; and a context/language filter module configured to filter the one or more individual voice streams based on the context.

The communication server may further comprise a database comprising context data. The database may further comprise primary language information.

### BRIEF DESCRIPTION OF THE DRAWING FIGURES

Subject matter of the present disclosure is particularly pointed out and distinctly claimed in the concluding portion of the specification. A more complete understanding of the present disclosure, however, may best be obtained by referring to the detailed description and claims when considered in connection with the drawing figures.
FIG. 1 illustrates an electronic communication system in accordance with exemplary embodiments of the disclosure.
FIG. 2 illustrates an electronic communication system and method in accordance with exemplary embodiments of the disclosure.
FIG. 3 illustrates a method in accordance with exemplary embodiments of the disclosure.
FIG. 4 illustrates a speaker identification process in accordance with exemplary embodiments of the disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present disclosure.

### DETAILED DESCRIPTION OF EXEMPLARY EMBODIMENTS

The description of various embodiments of the present disclosure provided below is merely exemplary and is intended for purposes of illustration only; the following description is not intended to limit the scope of an invention disclosed herein. Moreover, recitation of multiple embodiments having stated features is not intended to exclude other embodiments having additional features or other embodiments incorporating different combinations of the stated features.

Various exemplary embodiments of the disclosure provide electronic communication methods and systems for determining a context and/or a language during an electronic communication and filtering one or more voice streams based on the determined context and/or language of respective voice streams. As set forth in more detail below, exemplary systems and methods described herein can perform such steps using real-time processing and can provide reconstructed voice streams to participants of the electronic communication.

While the ways in which exemplary methods and systems address the drawbacks of prior methods and systems are addressed in more detail below, in general, exemplary systems and methods can separate audio information into voice streams and filter the voice streams based on context of segments of the voice streams and/or a language spoken during segments of the voice streams.

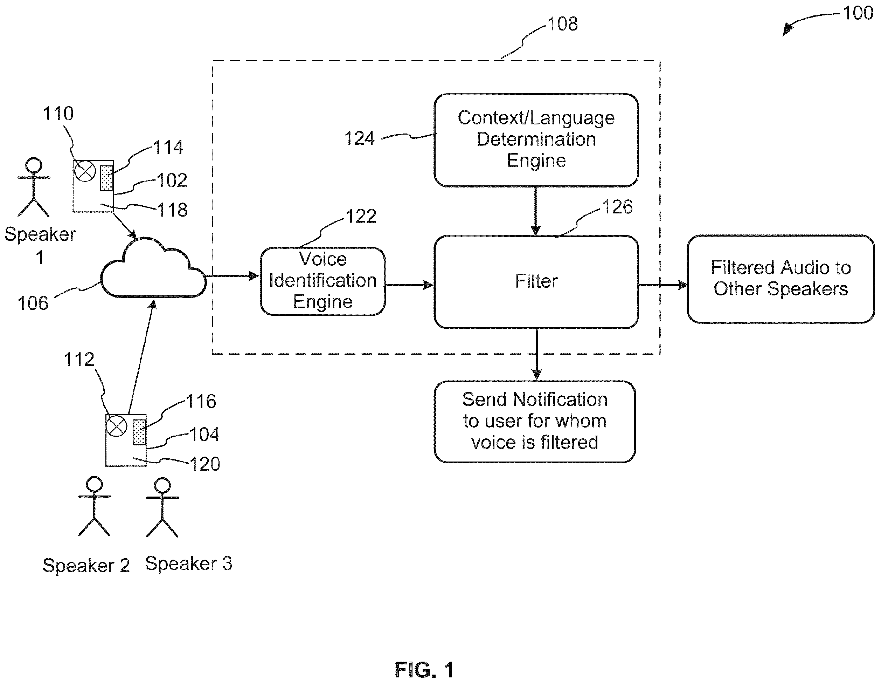

In accordance with examples of this disclosure, an electronic communication system is provided. FIG. 1 illustrates an exemplary electronic communication system 100 in accordance with examples of the disclosure. Electronic communication system 100 includes user devices 102, 104, a communication network 106, and a communication server 108. Systems in accordance with various embodiments can include any suitable number of user devices 102, 104 and/or communication networks 106. Further, in accordance with additional examples of the disclosure, a system can include a subset of one or any combination of devices and servers described herein.

In the illustrated example, a single speaker (speaker 1) is associated with user device 102 and a plurality of speakers (speakers 2 and 3) are associated with device 104. System 100 can be configured to identify voice streams by associating the voice stream with a particular device (e.g., speaker 1/device 102) and/or by voice characteristics, as described in more detail below. Speakers 2 and 3 may engage in a side conversation and transmit that side conversation using a single device 104.

User devices 102, 104 can be or include any suitable device with wired or wireless communication features. For example, electronic communication device 102 can include a wearable device, a tablet computer, a smart phone, a personal (e.g., laptop) computer, a streaming device, such as a game console or other media streaming device, such as Roku, Amazon Fire TV, or the like, or any other device that includes communication capabilities.

In accordance with some exemplary aspects of various embodiments of the disclosure, devices 102 and 104 include one or more microphones 110, 112, one or more speakers 114, 116, and a display 118, 120. Devices 102, 104 can include various components, such as those found in typical smart devices, such as smart phones.

Network 106 can include a local area network (LAN), a wide area network, a personal area network, a campus area network, a metropolitan area network, a global area network, a local exchange network, a public switched telephone network (PSTN), a cellular network, the like, and any combinations thereof. Network 106 may be coupled to communication server 108 and/or other system components using an Ethernet connection, other wired connections, wireless interfaces, or the like. Network 106 may be coupled to other networks and/or to other devices typically coupled to networks.

Communication server 108 can be or include any suitable server or computing device. By way of examples, communication server 108 can be or include a private branch exchange (PBX) server or other suitable telephone exchange or switching system/server. In some cases, communication server 108 can provide a connection between user devices, such as user devices 102 and 104, and/or other user devices. In accordance with various embodiments of the disclosure, communication server 108 includes various engines or modules configured to perform various actions as described herein.

The term module or engine as used herein can refer to computer program instructions, encoded on computer storage medium for execution by, or to control the operation of, data processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., solid-state memory that forms part of a device, disks, or other storage devices).

As illustrated in FIG. 1, communication server 108 can include a voice identification engine 122, a context/language determination engine 124, and a filter 126. During operation of system 100, voice identification engine 122 can be configured to identify speaker voice streams (e.g., by device and/or voice characteristic) and generate and output one or more individual voice streams with associated identifiers, context/language determination engine 124 can be configured to determine a context and/or language of the electronic communication and determine a context and/or language of at least a portion of one or more of the individual voice streams, and context/language filter module can be configured to filter the one or more individual voice streams based on the context and/or language of the electronic communication. Although illustrated separated from network 106, communication server 108 can form part of network 106 or another network. Further, although illustrated on a single server, voice identification engine 122, context/language determination engine 124, and/or filter 126 can reside on separate devices, such as separate servers or other components of network 106, or another network. In some cases, various modules or engines described herein can reside on one or more user devices 102, 104.

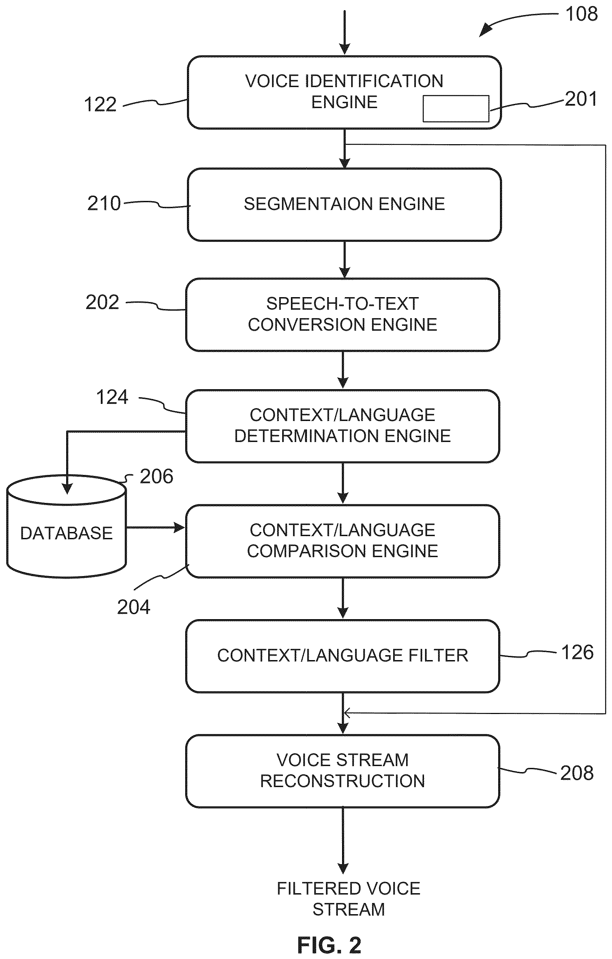

FIG. 2 illustrates an exemplary communication server 108 and/or system 100 components in more detail. As illustrated, communication server 108/system 100 includes voice identification engine 122, a speech-to-text conversion engine 202, context/language determination engine 124, a context/language comparison engine 204, a context/language database 206, context/language filter module 126, and a voice stream reconstruction module 208. Communication server 108/system 100 can also include a segmentation engine 210.

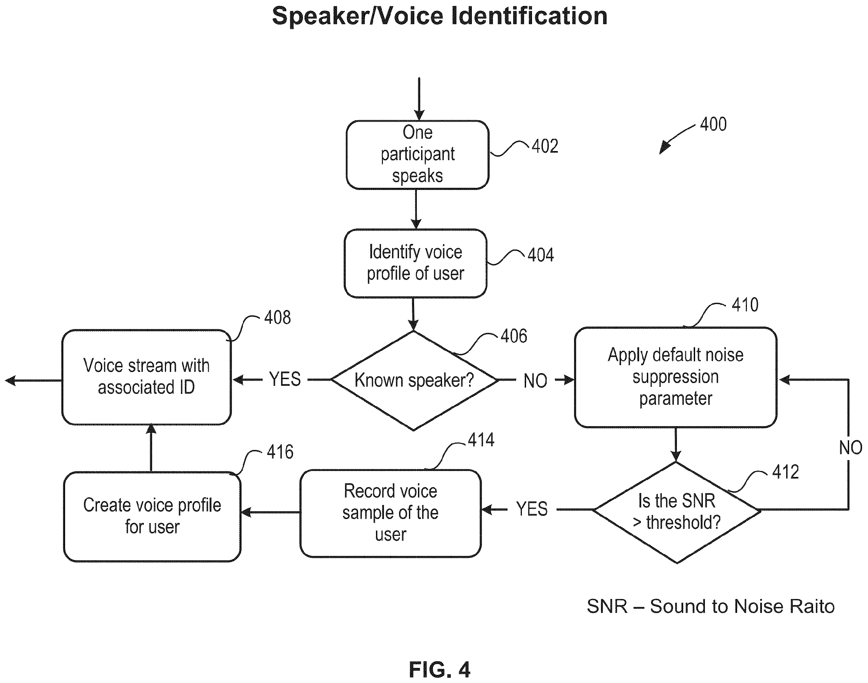

As noted above, voice identification engine 122 is configured to identify speaker voice streams and generate one or more individual voice streams with associated identifiers. Voice identification engine 122 can identify a speaker based on a device used by the speaker and/or by voice characteristics. The latter may be particularly useful when two or more speakers use the same user device during an electronic communication. Voice identification engine 122 can include a voice segmentation engine 201 to parse one or more voice streams into segments for speaker/voice identification. An exemplary process/engine suitable for voice/speaker identification engine 122 is described in more detail below in connection with FIG. 4.

After the voice streams are identified, segmentation engine 210 is configured to segment the one or more individual voice streams from voice identification engine 122 into smaller segments. For example, segmentation engine 210 can parse individual voice streams into audio information of a (e.g., same) length (typically, of 20-40 milliseconds) for further segment-wise processing.}

Speech-to-text conversion engine 202 receives the individual voice streams or the segments thereof from segmentation engine 210 and converts audio information of the one or more individual voice streams to text information with associated identifier information.

Context/language determination engine 124 is configured to receive the text information and determine a context and/or language of at least a portion of the text information. Context/language determination engine 124 is also configured to determine a context and/or a language of the electronic communication. For example, a context and/or language of the electronic communication can be determined based on user input, from a calendar meeting invite, from an agenda of the electronic communication, or the like. Once a context and/or language of the electronic communication is determined, the context and/or (e.g., primary) language information is stored in a database 206. Database 206 can also include a blocked list of topics, such as vacation, social activities, or the like and/or languages. Such blocked list information can be used to automatically filter sections of a voice stream that include the blacklisted context.

Context/language comparison engine 204 compares a context and/or language from the text information (e.g., segments of text information) and compares the context and/or language to context and/or (e.g., a primary) language information stored in database 206. If a context and/or language of the text information does not match a context and/or language of the electronic communication, the text information is flagged, such that the respective audio information is filtered from the electronic communication.

Context/language filter module 126 is configured to filter the one or more individual voice streams based on the context or a primary language. Context/language filter module 126 correlates segments of text information with the segments of audio information and identifies audio segments to be removed from a voice stream.

Voice stream reconstruction module 208 reconstructs the individual voice streams with any filtered audio segments removed. In accordance with examples of the disclosure, once unwanted segments of a voice stream are identified and filtered, the remaining audio is reconstructed by concatenating the kept segments. To avoid abrupt cuts or clicks in the reconstructed voice stream, smoothing and/or crossfading between the kept segments can be applied. The filtered voice stream can then be transmitted to the other participants to the electronic communication.

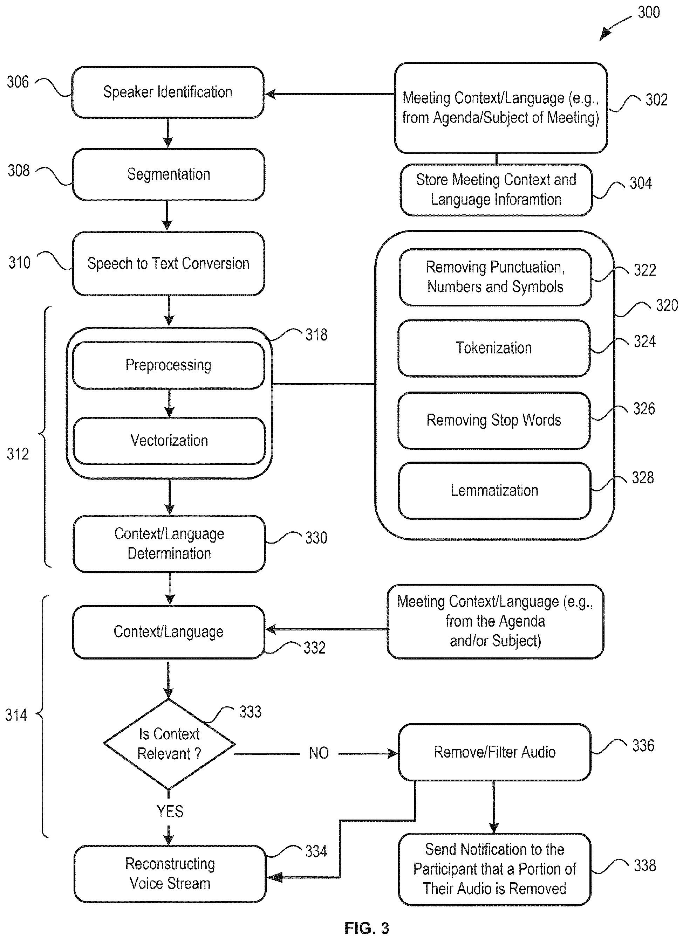

FIG. 3 illustrates an exemplary method 300 in accordance with examples of the disclosure. Method 300 includes a step of determining a context and/or language of an electronic communication (302) and storing the context and/or language information (304), using a voice identification engine, identifying speaker voice streams and forming individual voice streams with associated identifiers (306), using a segmentation engine, segmenting the individual voice streams to generate the audio information (308), using a speech-to-text conversion engine, converting audio information of the individual voice streams to text information with associated identifier information (310), using a context/language determination engine, determining a context of the electronic communication and a context of at least portions of the text information (312), using a context/language filter module, filtering the individual voice streams based on the context (314), and using a context/language filter module, filtering the individual voice streams based on the context (316). In accordance with various examples of method 300, one or more (e.g., all) steps are performed using real-time processing. For example, the steps of using a voice identification engine, using a speech-to-text conversion engine, using a context/language determination engine, using a context/language filter module, and transmitting the individual filtered voice streams can all be performed using real-time processing.

During steps 302 and 304, context and/or (e.g., a primary) language information for an electronic communication are provided and/or determined. Such information can be provided directly by one or more participants or can be determined from, for example, a meeting invitation or notice, corresponding documents, and/or corresponding communications. The context and/or (e.g., a primary) language information can be used in subsequent steps, as described herein.

During step 306, individual voice streams are identified. In some cases, one or more voice streams can be segmented to facilitate speaker identification. As noted above, FIG. 4 illustrates a process 400 that can be performed (e.g., by voice identification engine 122) to identify individual voices and to generate individual voice streams (e.g., based on a microphone 110 or 112 used and/or voice characteristics) in accordance with examples of the disclosure.

As illustrated in FIG. 4, a voice identification process 400 can begin with step 402 of a participant speaking. At step 404, a speaker voice profile of a speaker is obtained. During step 406, a determination is made as to whether the voice profile obtained during step 404 is known. In this context, a known voice profile can be a voice profile that matches a previously stored profile within a predetermined threshold. If a voice profile is known, process 400 proceeds to step 408 of generating or forming individual voice streams with associated identifiers. If the voice profile is not known, process 400 proceeds to step 410 of applying default noise suppression parameters to the voice stream to create a noise suppressed voice stream and step 412 of determining whether a predetermined signal-to-noise ratio of the noise suppressed voice stream is above a predetermined threshold. If not, process 400 proceeds back to step 410. If the noise suppressed voice stream is above a predetermined threshold, process 400 proceeds to step 414 of recording a voice sample of the speaker and step 416 of creating a voice profile for the speaker. Process 400 then proceeds to step 408 of generating a voice stream with an associated ID.

Returning again to FIG. 3, during step 308, the individual voice streams (with associated voice/speaker identification) are segmented to generate segmented audio information or simply the audio information. The audio information is sent to the speech-to-text conversion engine.

During step 310, the audio information (e.g., segments thereof) are converted to text information. The text can include transcribed information and corresponding speaker and/or voice stream identification.

During step 312, a context and/or language of (e.g., each segment of) the text information is determined. Step 312 can include processing and vectorization step 318 and text management step 320. During processing and vectorization step 318, unique words can be identified and an occurrence of each word is determined. Text management step 320 can include a removing punctuation step (322), a tokenization step (324), a removing stop words step (326), and a lemmatization step (328). During removing punctuation step 322, punctuation from the text information is removed. During tokenization step 324, stop words (such as "is," "and," "the," "by," and the like), punctuation, and low-frequency words are removed by separating a text record into more modest units called tokens. A token can be a word, a sentence, or even a person. Tokenization separates the crude text into units that can be broken down and handled. For example, a paragraph can be broken down into individual sentences by a process known as sentence tokenization. These sentences are then broken down into individual words through a process known as word tokenization. During tokenization, the text information remains with associated identifier information. During stop word removal step 326, stops words are removed. During lemmatization step 328, words can be reduced to their root form. During lemmatization, the information remains associated with associated identifier information.

Once steps 318 and 320 are performed, a context and/or language of the text information is determined (330).

During step 314, a context/language determination engine (e.g., context/language determination engine 124) is used to determine a context and/or primary language of the electronic communication and a context and/or language of at least portions (e.g., segments) of the text information. The context and/or primary language of the electronic communication can be determined by, for example, data or information provided during step 302.

As illustrated, step 314 includes comparing a context of the electronic communication to a context of at least portions of the text information (332) and determining whether the context matches or is relevant (333). If the context matches/is relevant and/or the language matches, method 300 proceeds to step 334 of reconstructing the individual voice stream for transmission to the participants. The reconstructed voice streams do not include filtered information. Method 300 can also include one or more of smoothing or crossfading of audio segments of the filtered voice streams to avoid or mitigate abrupt cuts or clicks in the reconstructed voice stream.

If the context does not match/is not relevant and/or the language does not match, the section of audio information corresponding to the non-matching text information is filtered out (336) and method 300 then proceeds to step 334 of reconstructing the voice stream. As illustrated, method 300 can also include sending a notification to a participant that a portion of their voice stream/information has been filtered or removed (338).

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. It will be recognized that changes and modifications may be made to the exemplary embodiments without departing from the scope of the present invention. These and other changes or modifications are intended to be included within the scope of the present invention, as expressed in the following claims.

## Claims

1. An electronic communication method comprising:
using a voice identification engine, identifying speaker voice streams and forming individual voice streams with associated identifiers;
using a speech-to-text conversion engine, converting audio information of the individual voice streams to text information with associated identifier information;
using a context/language determination engine, determining a context of the electronic communication and a context of at least portions of the text information;
using a context/language filter module, filtering the individual voice streams based on the context; and
transmitting individual filtered voice streams to one or more electronic communication participant devices,
wherein the steps of using a voice identification engine, using a speech-to-text conversion engine, using a context/language determination engine, using a context/language filter module, and transmitting the individual filtered voice streams are performed using real-time processing.

2. The electronic communication method of claim 1, further comprising:
using a segmentation engine, segmenting the individual voice streams to generate the audio information.

3. The electronic communication method of claim 1 or claim 2, further comprising a step of:
using the context/language determination engine, determining a primary language of the electronic communication.

4. The electronic communication method of claim 3, further comprising a step of:
using the context/language filter module, filtering the individual voice streams based on the primary language.

5. The electronic communication method of any preceding claim, further comprising a step of:
sending a message to a participant indicating that the participant's voice stream has been filtered.

6. The method of any preceding claim, further comprising a step of reconstructing the individual voice streams that do not include filtered information.

7. The method of claim 6, further comprising one or more of smoothing or crossfading of audio segments of the filtered voice streams.

8. The method of any preceding claim, further comprising a step of tokenization of the text information with associated identifier information.

9. The method of claim 8, further comprising a step of removing stop words and/or.
a step of lemmatization and /or
a step of vectorization.

10. An electronic communication system comprising:
a voice identification engine configured to identify speaker voice streams and generate one or more individual voice streams with associated identifiers;
a speech-to-text conversion engine configured to convert audio information of the one or more individual voice streams to text information with associated identifier information;
a context/language determination engine configured to determine a context of the electronic communication and determine a context of at least a portion of the text information; and
a context/language filter module configured to filter the one or more individual voice streams based on the context.

11. The electronic communication system of claim 10, wherein the context/language determination engine is configured to determine a primary language of an electronic communication and optionally wherein the context/language filter module is further configured to filter voice stream information based on the primary language.

12. The electronic communication system of claim 10 or claim 11, further comprising a segmentation engine configured to segment the one or more individual voice streams.

13. The electronic communication system of any of claims 10 to 12, further comprising a database comprising context information and optionally wherein the database further comprises primary language information.

14. A communication server comprising:
a voice identification engine configured to identify speaker voice streams and generate one or more individual voice streams with associated identifiers;
a speech-to-text conversion engine configured to convert audio information of the one or more individual voice streams to text information with associated identifier information;
a context/language determination engine configured to determine a context of the electronic communication and determine a context of at least a portion of the text information; and
a context/language filter module configured to filter the one or more individual voice streams based on the context.

15. The communication server of claim 14, further comprising a database comprising context data and optionally wherein the database further comprises primary language information.
